# EUROPEAN PATENT APPLICATION

(11) **EP 4 641 141 A1**
(43) Date of publication of application: **29.10.2025**
(21) Application number: 22968748.8
(22) Date of filing: 22.12.2022
(51) Int. Cl.: G01C 21/28

(54) **GUIDANCE CORRECTION METHOD AND GUIDANCE CORRECTION DEVICE**

(71) Applicant: Nissan Motor Co., Ltd., Kanagawa 221-0023 (JP)
(72) Inventor: OHKUBO, Shota, Atsugi-shi, Kanagawa 243-0123 (JP)
(74) Representative: Global IP Europe Patentanwaltskanzlei
(86) International application number: PCT/JP2022/047419
(87) International publication number: WO 2024/134837

(57) **Abstract**

There is provided a guidance revising method that is to be executed by a controller 12 and for revising guidance to a destination, the guidance revising method including, by the controller 12: obtaining a map target body from a database 15; detecting an object using a sensor at a position a first distance away from a guidance point during traveling on a traveling route; determining whether the map target body matches the object; revising guidance information on the guidance point when the map target body is determined not to match the object; and outputting the revised guidance information.

## Description

### Technical Field

The present invention relates to a guidance revising method and a guidance revising apparatus.

### Background Art

There has been known a map information management apparatus that manages map information (e.g., see Patent Document 1). The map information management apparatus according to Patent Document 1 obtains a position where a vehicle has operated differently from a guiding route, obtains a captured image in which the obtained position is captured from an image capturing unit, generates difference information on the difference between landmark information obtained from the captured image and landmark information included in map information on the position where the vehicle is determined to have operated differently from the guiding route, and updates the landmark information based on the difference information.

### Prior Art Document

### Patent Document

Patent Document 1: WO2019/087302

### Summary of Invention

### Problems to be Solved by Invention

However, when the vehicle first reaches a point where a landmark is different from an actual one, the map information management apparatus according to Patent Document 1 provides only guidance based on the landmark information before update and does not provide guidance about the difference between the landmarks. Therefore, the reliability of the guidance is unfortunately low.

A problem to be solved by the present invention is to provide a guidance revising method and a guidance revising apparatus that enhance the reliability of guidance.

### Means for Solving Problems

The present invention solves the above problem by: obtaining a map target body from a database; detecting an object using a sensor at a position a first distance away from a guidance point during traveling on a traveling route; determining whether the map target body matches the object; revising guidance information on the guidance point when the map target body is determined not to match the object; and outputting the revised guidance information.

### Effects of Invention

According to the present invention, it is possible to enhance the reliability of the guidance.

### Brief Description of Drawings

FIG. 1 is a block diagram of a route guidance system including a guidance revising apparatus according to an embodiment of the present invention.
FIG. 2 is a flowchart illustrating an example of a control procedure to execute a guidance revising method according to the embodiment of the present invention.
FIG. 3 is a flowchart illustrating an example of a control procedure to execute the guidance revising method according to the embodiment of the present invention.

### Mode(s) for Carrying out the Invention

Hereinafter, an embodiment of the present invention will be described with reference to the drawings. The present embodiment will be described using an example in which a guidance revising method and a guidance revising apparatus according to the present invention are applied to a route guidance system.

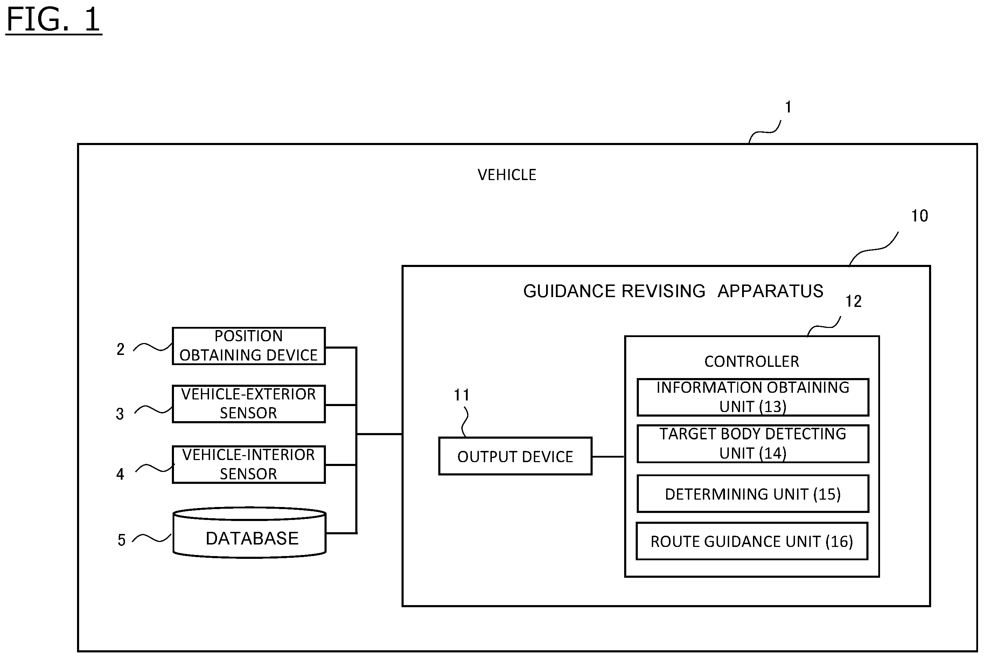

FIG. 1 is a block diagram of a route guidance system including a guidance revising apparatus 10 according to the present embodiment. As illustrated in FIG. 1, the route guidance system is provided in a vehicle 1. The route guidance system includes a position obtaining device 2, a vehicle-exterior sensor 3, a vehicle-interior sensor 4, a database 5, and the guidance revising apparatus 10. The position obtaining device 2, the vehicle-exterior sensor 3, the vehicle-interior sensor 4, the database 5, and the guidance revising apparatus 10 are provided in the vehicle 1 and exchange information with one another over an on-board network such as a CAN. In the route guidance system, the guidance revising apparatus 10 provides a user who is on board the vehicle 1 with route guidance from the current position of the user to a destination. The guidance revising apparatus 10 is, for example, a navigation apparatus provided in the vehicle 1. In the present embodiment, the guidance revising apparatus 10 is described as an on-board navigation apparatus. However, this is not limiting. The guidance revising apparatus 10 may be a terminal device carried by the user.

In the route guidance, the guidance revising apparatus 10 outputs guidance information to the user. The guidance information includes, for example, a map and a route from the current position of the user to the destination. When the vehicle 1 approaches a guidance point where the route guidance needs to be provided to the user, the guidance revising apparatus 10 outputs guidance information including a proceeding direction at the guidance point to the user. The guidance point is a point where two or more routes accessible for entry are present, such as an intersection, a branch point, or an interchange on an expressway. Any point necessary for guiding the vehicle in a proper proceeding direction can be set in advance as the guidance point even if the point is not a point where two or more routes accessible for entry are present. In other words, the guidance revising apparatus 10 can determine in advance points each necessary for guiding the vehicle in a proper proceeding direction as guidance points and use the points. Under the route guidance, the user drives the vehicle 1.

The position obtaining device 2 obtains positional information on the vehicle 1 as positional information on the user. The position obtaining device 2 obtains the positional information on the vehicle 1 from, for example, GPS satellites. The position of the vehicle 1 is given by a latitude and longitude. The position obtaining device 2 obtains the positional information from the GPS satellites at given intervals determined in advance.

The vehicle-exterior sensor (on-board sensor) 3 detects a surrounding environment including a subject body near the user. The vehicle-exterior sensor 3 is, for example, a camera installed on the vehicle 1, and the camera may include an image sensor such as a CCD or a CMOS. The vehicle-exterior sensor 3 is not limited to an on-board camera. The vehicle-exterior sensor 3 may be a distance measurement device such as a LASER. The vehicle-exterior sensor 3 obtains a periphery image that is a captured image of a subject body near the vehicle. The subject body serves as a mark in the surrounding environment around the vehicle. The subject body includes a static subject body and a dynamic subject body. The static subject body is, for example, advertising signage, a sign, a stop line, a traffic signal, a crosswalk, a traffic restriction, a roadside tree, a building, or a roadway structure. The roadway structure includes a bridge and a tunnel. The dynamic subject body includes, for example, an automobile other than a subject vehicle (another vehicle), a motorcycle, a bicycle, and a pedestrian. The subject body stored in map data includes a landmark such as a convenience store, a restaurant, or a gas station. A subject body that is not stored in the map data is, for example, the dynamic subject body such as an automobile other than the subject vehicle (another vehicle).

The vehicle-exterior sensor 3 also detects the direction in which a subject body near the user is present and the distance to the body. The vehicle-exterior sensor 3 is, for example, a millimeter-wave radar, a laser radar, an ultrasonic radar, or a laser range finder. Surrounding environment information including the surrounding environment detected by the vehicle-exterior sensor 3 is output to the guidance revising apparatus 10 at given intervals.

The vehicle-interior sensor 4 detects the state of a user in the vehicle. The vehicle-interior sensor 4 is, for example, a camera installed inside the vehicle 1, and the camera may include an image sensor such as a CCD or a CMOS. For example, the vehicle-interior sensor 4 continuously captures a user image including the face of the user. The vehicle-interior sensor 4 may detect biological information on the user. The biological information on the user includes the heartbeat, perspiration, body temperature, and pulse of the user.

The database 5 is a database that stores various information. The database 5 is a recording medium that stores information about target bodies. The database 5 stores map information. The map information includes at least road information and information about map target bodies (landmark information). Note that, in the following description, the target bodies stored in the database correspond to the map target bodies. The road information includes types of roads (e.g., an ordinary road, a toll road, etc.) and the positions of an intersection, a stop line, a traffic signal, and a traffic sign. Each target body is an artifact that can serve as a target in the route guidance. Target body information includes information about a map target body such as a convenience store, a restaurant, or a gas station. In other words, the target body information is information on a map target body at a guidance point where the guidance is needed. For example, in the case where the route guidance such as "Turn left at the intersection with a gas station" is provided, the gas station serves as the map target body. Note that the road information may also serve as the target body information. For example, in the case of information on an intersection, the intersection can serve as a map target body in the route guidance such as "Turn right at the next intersection." The map information also includes positional information on a guidance point where the guidance is needed.

The guidance revising apparatus 10 is an apparatus that provides a user (occupant) the route guidance to the destination and revises guidance information on a guidance point. The guidance revising apparatus 10 includes an output device 11 and a controller 12. In the guidance revising apparatus 10, the controller 12 obtains information from the position obtaining device 2, the vehicle-exterior sensor 3, the vehicle-interior sensor 4, and the database 5, generates guidance information necessary for the route guidance on the basis of the obtained information, and outputs the guidance information via the output device 11 to the user. Thus, the user is provided with the route guidance to the destination, and guidance information on a guidance point is revised.

The output device 11 is an output interface that outputs the route guidance based on a generated route. The output device 11 provides the user with a screen display of a route generated by the guidance revising apparatus 10, the current position, the content of a revised guidance, and the like and provides a voice output of guidance information generated by the guidance revising apparatus 10. The output device 11 includes one or more pieces of equipment. For example, the output device 11 includes a display device that displays the route guidance and the guidance information on its screen and a speaker that outputs voice data on the route guidance and the guidance information. Examples of the display device include a liquid crystal panel and an organic EL panel.

The controller 12 includes a computer with hardware and software. The computer includes a ROM that stores a program, a CPU that executes the program stored in the ROM, and a RAM that functions as an accessible storage device.

As illustrated in FIG. 1, the controller 12 includes, as functional blocks, an information obtaining unit 13, a target body detecting unit 14, a determining unit 15, and a route guidance unit 16. The controller 12 executes their respective functions through cooperation with the software and hardware for executing processes. In the present embodiment, the functions of the controller 12 are sorted into the four functional blocks, of which the functions will be described. However, the functions of the controller 12 need not necessarily be sorted into the four blocks.

The information obtaining unit 13 obtains information on the current position of the vehicle from the position obtaining device 2. The information obtaining unit 13 obtains the map information including the road information and the target body information from the database 5. The map information is used to calculate a traveling route to the destination and identify a target body at a guidance point. In the case where the route to the destination is calculated outside the information obtaining unit 13, the information obtaining unit 13 can obtain information on the traveling route including destination information.

The information obtaining unit 13 obtains various information. The information obtaining unit 13 obtains, from the vehicle-exterior sensor 3, the surrounding environment information detected by the vehicle-exterior sensor 3. The surrounding environment information is information indicating the environment around the vehicle and corresponds to a captured image from the camera included in the vehicle-exterior sensor 3.

The information obtaining unit 13 may obtain a captured image of a user from the camera of the vehicle-interior sensor 4 and may obtain the biological information on the user from a biological sensor. The information obtained by the information obtaining unit 13 is transmitted to the target body detecting unit 14, the determining unit 15, and the route guidance unit 16.

The target body detecting unit 14 detects an object using the vehicle-exterior sensor 3 at a position a first distance away from a guidance point during traveling on the traveling route. The object is an artifact that can serve as a target in the route guidance. The object represents an actual artifact in an actual traveling environment. Note that, in the present embodiment, a target body detected by the vehicle-exterior sensor 3 is referred to as an "object." The object corresponds to a map target body. The object is a target body such as a convenience store, a restaurant, or a gas station. The object may be a target body indicated by the road information. The first distance is a distance that is determined in advance in accordance with a distance within which the vehicle-exterior sensor 3 can detect an object. For example, assuming that the on-board sensor 3 is an on-board camera, the first distance is equivalent to a distance corresponding to the image-capturing range of the on-board camera or a distance shorter than the distance corresponding to the image-capturing range of the on-board camera. In other words, when the vehicle 1 is at a position the first distance away from a guidance point, the on-board camera can capture an image of an object at the guidance point. The route guidance unit 16 described later calculates the traveling route to the destination and sets a guidance point where the guidance is needed, to the calculated traveling route. Note that although the following describes an embodiment in which an on-board camera is mainly applied as an example of the vehicle-exterior sensor 3, a distance measurement device may be used instead of the on-board camera. In the case of the distance measurement device, the image-capturing range in the following description can be regarded as a detection range, and the captured image can be replaced with a detection value from the distance measurement device.

The target body detecting unit 14 obtains route guidance information including a guidance point from the route guidance unit 16 and identifies the position of the guidance point indicated in the route guidance information and the position of a map target body at the guidance point by referring to the map information. The route guidance information includes information on the traveling route to the destination, information on a guidance point where the guidance is needed when the vehicle travels along the traveling route, and information on a map target body at the guidance point. The target body detecting unit 14 measures the distance from the current position of the vehicle to the next guidance point. When the measured distance becomes the first distance, a captured image from the on-board camera is obtained. The obtained captured image may be an image captured at the time when the measured distance becomes the first distance or a timing immediately before the measured distance becomes the first distance. From the captured image, the target body detecting unit 14 detects a target body of which an image is captured at the guidance point that is identified from the route guidance information.

The determining unit 15 determines whether a map target body matches an object. The determining unit 15 determines whether a map target body at the guidance point identified from the route guidance information matches an object detected by the target body detecting unit 14 using the vehicle-exterior sensor 3. Whether the map target body is actually present at the guidance point is determined from the result of detecting the target body using the captured image. For example, assume that the route guidance indicated by the route guidance information is "Turn left at the intersection with a convenience store." The target body detecting unit 14 detects an object situated at the intersection being the guidance point from the captured image. The determining unit 15 determines whether the map target body indicated by the route guidance information matches the object detected by the target body detecting unit 14. The determination of whether the map target body matches the object includes determination between their positions. In the case where the route guidance is "Turn left at the intersection with a convenience store," when it can be detected from the captured image that the convenience store is situated at the intersection, the determining unit 15 determines that the object is present at the guidance point. On the other hand, when it can be detected that the convenience store is not situated at the intersection, or when it cannot be detected that the convenience store is situated at the intersection, the determining unit 15 determines that the object is not present at the guidance point. Since the object is not present at the guidance point, the determining unit 15 determines that the map target body does not match the object. When it can be detected that a target body other than the convenience store is situated at the intersection, the determining unit 15 determines that the map target body does not match the object due to the difference between the position of the map target body and the position of the object. Note that, in the determination of whether the positions match, the determining unit 15 may determine that the positions match when the difference between the positions is within a given range that is set in accordance with a detection error.

The route guidance unit 16 provides the route guidance such that the vehicle 1 travels along the traveling route from the current position of the vehicle 1 to the destination. Obtaining the current position of the vehicle 1 and the destination of the vehicle 1, the route guidance unit 16 refers to the map information stored in the database 5 and generates the traveling route from the current position of the vehicle 1 to the destination. As the current position of the vehicle 1, the route guidance unit 16 uses the positional information obtained by the position obtaining device 2. As the destination of the vehicle 1, the route guidance unit 16 uses information on a destination input by the user. The traveling route may be a route that passes through a plurality of destinations. The route guidance unit 16 provides the user with a screen display of the map, the traveling route, the current position of the vehicle 1, and the like via the output device 11.

The route guidance unit 16 also extracts a guidance point located on the traveling route on the basis of the route information on the traveling route and the map information. When the vehicle 1 starts traveling along the traveling route, the route guidance unit 16 obtains the current position of the vehicle 1 at certain intervals and determines, on the basis of the current position of the vehicle 1 and the position of the guidance point on the traveling route, whether the vehicle 1 comes close to the guidance point. When the vehicle 1 comes close to the guidance point, the route guidance unit 16 causes the output device 11 to output guidance information on a guidance point. For example, the route guidance unit 16 may cause the output device 11 to provide a voice output of the generated guidance information or may display, on the screen, a text or an icon of an arrow or the like that indicates a proceeding direction in which the user should proceed.

The route guidance unit 16 provides the route guidance at a guidance point in two stages: preliminary guidance and immediate guidance. The preliminary guidance is guidance provided in a stage where a driver cannot see the guidance point. The preliminary guidance is provided at a position a second distance away from the guidance point. The second distance is set to be longer than the first distance and to be a distance that is longer than at least the distance corresponding to the image-capturing range of the vehicle-exterior sensor 3. That is, the preliminary guidance is provided at a position distant to the extent that the vehicle-exterior sensor 3 cannot capture an image of the guidance point. The route guidance unit 16 makes the guidance information include information on the remaining distance to the guidance point, target body information on the guidance point, and driving operation information on the guidance point and provides the guidance information to the user as the preliminary guidance. The information on a target body used in the preliminary guidance is information on a map target body saved in the database 5. This enables such route guidance that urges the driver to make advance preparations. In the preliminary guidance, for example, a message such as "In about 300 m, turn left at the intersection with a convenience store" is output. Such preliminary guidance enables the driver to confirm the target body before the driver actually sees the convenience store and to make preparations for a driving operation.

The immediate guidance is guidance provided after the preliminary guidance. The immediate guidance is guidance on the same guidance point as the preliminary guidance. The immediate guidance is provided while the driver is between a position less than the first distance away from the guidance point and the guidance point. The immediate guidance is guidance provided in a stage where the driver approaches so closely that the driver can see the guidance point. The immediate guidance is provided at least in the range within which the vehicle-exterior sensor 3 can capture an image of the guidance point. The route guidance unit 16 makes the guidance information include the target body information on the guidance point and the driving operation information on the guidance point and provides the guidance information to the user as the immediate guidance. Information on a target body used in the immediate guidance is destination information detected by the vehicle-exterior sensor 3. In the immediate guidance, for example, a message such as "Now, turn left at the intersection with the convenience store" is output. Hearing the message of the immediate guidance, the driver can confirm, at the intersection that can be seen, the presence of the target body (convenience store) expected in the preliminary guidance and can confirm that the guidance point is close at hand.

As described above, the target body in the preliminary guidance is identified from the target body information saved in the database, and the target body (object) in the immediate guidance is detected from the captured image from the on-board camera. Therefore, a map target body recorded on the database may differ from an actual object detected from a captured image from the on-board camera due to a belated update of the map information. In addition, for example, the on-board camera may fail to capture an image of an object due to an obstacle in the vicinity of the target body (e.g., a tree, or a building other than the target body), or the driver may fail to see a map target body used in the preliminary guidance.

Hence, in the present embodiment, the determining unit 15 compares the map target body used in the preliminary guidance with the object detected in the vicinity of the guidance point at the time of the immediate guidance and determines, from the result of the comparison, whether the map target body used in the preliminary guidance matches the object. In other words, the determining unit 15 executes the determination of whether the map target body matches the object on a target body on which the route guidance has been provided in the preliminary guidance. When the target body used in the preliminary guidance is determined not to match the object, the route guidance unit 16 revises guidance information pertaining to the route guidance on the guidance point and provides the immediate guidance using the revised guidance information. On the other hand, when the target body used in the preliminary guidance is determined to match the object, the route guidance unit 16 provides the immediate guidance without revising the guidance information pertaining to the route guidance on the guidance point.

The revision of the guidance information by the route guidance unit 16 is the revision of information about a target body. In other words, the revision of the guidance information is the revision of content for providing the guidance to the destination. The guidance information revised by the route guidance unit 16 preferably includes corrected guidance information in which the presence of the target body has been corrected and/or alternative guidance information on an alternative to the target body. For example, there will be described the case where the route guidance unit 16 has output a message in the preliminary guidance such as "In about 300 m, turn left at the intersection with a convenience store," but the "convenience store" is actually not there. In such a case, the route guidance unit 16 provides, as corrected guidance, a message conveying that the map target body used in the preliminary guidance is not present at the guidance point, such as "The convenience store was not there, was it?" That is, the corrected guidance information is information for correcting the presence of a target body indicated in the preliminary guidance.

Alternative guidance is guidance for assisting a driver in identifying a guidance point and has content different from that of the preliminary guidance. The alternative guidance information only needs to include information on at least one of an alternative target body other than the map target body before the revision, a road shape and/or a road structure at the guidance point, and a dynamic subject body. The map target body before the revision is the target body used in the preliminary guidance. For example, there will be described the case where a message such as "Turn left at the intersection with the gas station" is output in the immediate guidance before revision, but the "gas station" is actually not there. In such a case, in the case where a "convenience store" is present at the guidance point, the route guidance unit 16 outputs a message such as "Turn left at the intersection with a convenience store" as the alternative guidance information. Thus, the alternative target body, other than the map target body, is used in the alternative guidance information.

As another example of the alternative guidance, in the case where the road leads to an intersection at the guidance point, the route guidance unit 16 makes the route guidance information include information on the intersection and outputs a message such as "Turn left at the next signalized intersection" as the alternative guidance information. Thus, a road shape or a road structure present at the guidance point is used in the alternative guidance. As another example of the alternative guidance, in the case where a dynamic subject body is detected at or on the periphery of the guidance point by the vehicle-exterior sensor 3, the route guidance unit 16 outputs a message such as "Follow the car ahead" as the alternative guidance information. Thus, the dynamic subject body is used in the alternative guidance. When the guidance information is revised, the route guidance unit 16 revises guidance about a target body without revising the traveling route. However, the route guidance unit 16 may revise the traveling route.

The route guidance unit 16 then revises the guidance information on the guidance to the destination in the above manner and outputs the revised guidance information at a position less than the first distance away from a guidance point. This prevents the dissimilarity between the driver's acknowledgment prepared on the basis of the preliminary guidance and the situation of the guidance point that the driver actually sees in the case where the map target body used in the preliminary guidance does not match the object.

When a message indicating a corrected guidance is output, the route guidance unit 16 may generate a message based on the revised guidance information in accordance with an audio interface. For example, a revised message is given in a straightforward manner of correcting the message output in the preliminary guidance, an apologizing manner, a friendly manner, or the like. It is thus possible to adapt the impression of the output content in accordance with the nature of the audio interface.

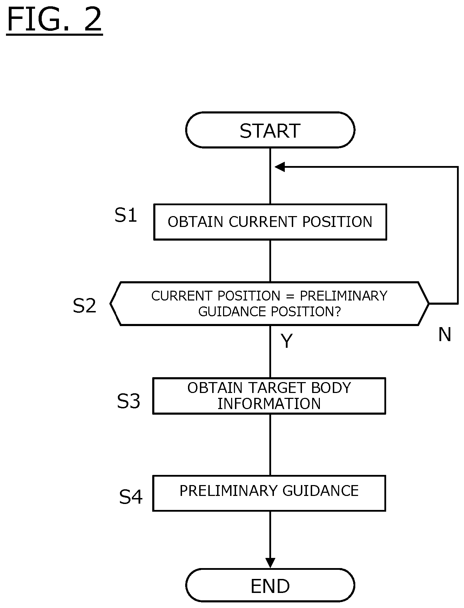

Next, with reference to FIG. 2, a control procedure of a guidance revising method executed by the guidance revising apparatus 10 will be described. FIG. 2 is a flowchart illustrating an example of a control procedure to execute a guidance revising method according to the present embodiment. The control flow in FIG. 2 is a control flow of providing the preliminary guidance. Note that the control flow in FIG. 2 is repeatedly executed while the vehicle 1 is traveling until the vehicle 1 arrives at the destination.

When the vehicle 1 starts traveling along a traveling route, the controller 12 starts the control flow with step S1. In step S1, the information obtaining unit 13 obtains information on the current position of the vehicle 1 from the position obtaining device 2. The information obtaining unit 13 obtains information from the vehicle-exterior sensor 3 and the vehicle-interior sensor 4. In step S2, the route guidance unit 16 determines whether the current position of the vehicle 1 has reached a preliminary guidance position. The preliminary guidance position is a position the second distance away from a guidance point. In the case where the current position of the vehicle 1 has not reached the preliminary guidance position, the controller 12 returns to step S1 in the control flow to execute the control flow from step S1.

In step S3, the route guidance unit 16 obtains target body information from the database and identifies a map target body at the guidance point on the traveling route. In step S4, the route guidance unit 16 provides the preliminary guidance using the map target body identified from the target body information in the database 5. The controller 12 then finishes the control flow illustrated in FIG. 2.

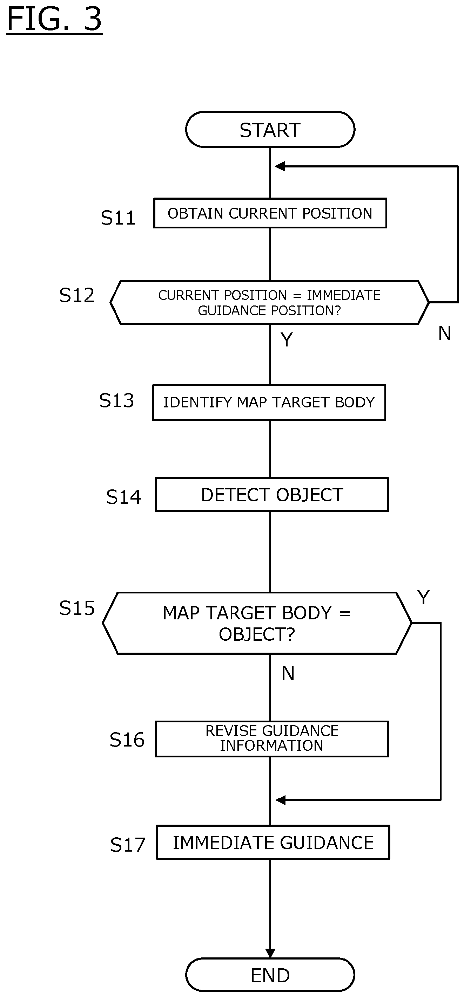

Next, with reference to FIG. 3, a control procedure of the guidance revising method executed by the guidance revising apparatus 10 will be described. FIG. 3 is a flowchart illustrating an example of a control procedure to execute the guidance revising method according to the present embodiment. The control flow in FIG. 3 is a control flow of providing the immediate guidance. The control flow in FIG. 3 is executed after the preliminary guidance.

In step S11, the information obtaining unit 13 obtains information on the current position of the vehicle 1 from the position obtaining device 2. The information obtaining unit 13 obtains information from the vehicle-exterior sensor 3 and the vehicle-interior sensor 4. In step S12, the route guidance unit 16 determines whether the current position of the vehicle 1 has reached an immediate guidance position. The immediate guidance position is a position the first distance away from a guidance point. In the case where the current position of the vehicle 1 has not reached the immediate guidance position, the controller 12 returns to step S11 in the control flow to execute the control flow from step S11. In step S13, the route guidance unit 16 identifies a map target body. The map target body is the map target body used in the preliminary guidance and corresponds to a target body identified from target body information in the database 5.

In step S14, the target body detecting unit 14 detects an object using the vehicle-exterior sensor 3 at a position the first distance away from the guidance point during traveling on a guided traveling route. In step S15, the determining unit 15 determines whether the map target body matches the object. When the map target body is determined not to match the object, the route guidance unit 16 revises guidance information. In step S17, the route guidance unit 16 outputs the revised guidance information to provide the immediate guidance at a position of the vehicle 1 less than the first distance away from the guidance point. On the other hand, when the target body is determined to be present at the guidance point, the route guidance unit 16 provides the immediate guidance in step S17 without revising the guidance information. The controller 12 then finishes the control flow illustrated in FIG. 3.

As described above, the guidance revising method and the guidance revising apparatus 10 according to the present embodiment: obtain a map target body, which is a target body at a guidance point where guidance is needed, from the database 5 storing information about target bodies; detect an object using the vehicle-exterior sensor (on-board sensor) 3 at a position the first distance away from the guidance point during traveling on a traveling route guided in route guidance; determine whether the map target body matches the object; revise guidance information on the guidance point when the map target body is determined not to match the object; and output the revised guidance information at a position less than the first distance away from the guidance point. This enables appropriate guidance to be provided even when a target body identified from recorded information in the database is actually not present at a guidance point. As a result, it is possible to enhance the reliability of the guidance.

In the present embodiment, the controller 12 provides the route guidance including a destination, at a position the second distance away from the guidance point. The determination of whether the map target body matches the object by the determining unit 15 is executed on a map target body on which the route guidance has been provided. This enables appropriate guidance to be provided even when the map target body used in the preliminary guidance does not match the object.

In the present embodiment, the revised guidance information includes corrected guidance information in which the presence of the map target body has been corrected and/or alternative guidance information for providing guidance on an alternative target body serving as an alternative to the map target body. It is thus possible to enhance the reliability of the guidance.

In the present embodiment, the alternative guidance information includes information on at least one of an alternative target body other than a map target body before the revision, a road shape and/or a road structure at the guidance point, and a dynamic subject body. It is thus possible to output alternative guidance suitable for the characteristics of the guidance point.

In a modification of the present embodiment, in the case where a plurality of alternative target bodies (alternative objects) are detected at the time of providing the alternative guidance, the controller 12 may evaluate, each of the plurality of alternative target bodies, the degree of dissimilarity between the alternative target body and a map target body indicated by target body information and provides the guidance, with information about an alternative target body having the lowest degree of dissimilarity included in the guidance information. The degree of dissimilarity is an evaluation value that indicates the difference in information attribute from a map target body guided in the preliminary guidance. The information attribute is indicated in terms of the positional relationship with the alternative target bodies, the type of the alternative target bodies, the color of the alternative target bodies, or the like. In other words, the degree of dissimilarity is a value that is determined in accordance with at least one of elements including the positional relationship between the map target body and an alternative target body at a guidance point, the positional relationship between a traveling route and the alternative target body at the guidance point, and the distance from the alternative target body to the guidance point. The route guidance unit 16 may calculate the degree of dissimilarity in accordance with the positional relationship between the position of the map target body and the alternative target body at the guidance point. When the position of the map target body guided in the preliminary guidance (hereinafter, also referred to as a pre-revision target body) matches the position of the alternative target body, the degree of dissimilarity takes a low value. The closer the position of the pre-revision target body is to the position of the alternative target body, the lower the degree of dissimilarity becomes.

The route guidance unit 16 may calculate the degree of dissimilarity in accordance with the positional relationship between the traveling route and the alternative target body at the guidance point. For example, in the case of a guiding route such that the vehicle 1 is to turn left at a guidance point, an alternative target body at a position that is easy for a driver to see on a route on which the vehicle 1 turns left has a low degree of dissimilarity. For example, assume that a pre-revision target body is situated in the southwest of an intersection in the case where route guidance is such that the vehicle 1 is to enter the intersection from the south and turn left at the intersection to head west. In such a case, an alternative target body located in the southwest of the intersection has the lowest degree of dissimilarity, an alternative target body located in the northwest has the second lowest degree of dissimilarity, an alternative target body located in the southeast has the third lowest degree of dissimilarity, and an alternative target body located in the northeast has the highest degree of dissimilarity. The route guidance unit 16 may calculate the degree of dissimilarity in accordance with the distance from the alternative target body to the guidance point. The closer the alternative target body is to the guidance point, the more the route guidance unit 16 may decrease the degree of dissimilarity.

In the case where the pre-revision target body and the alternative target body are the same in the type, the degree of dissimilarity is decreased. For example, in the case where the pre-revision target body is a convenience store, and the alternative target body is a gas station, the degree of dissimilarity is decreased because these target bodies are the same building and therefore buildings of the same type. After evaluating the degree of dissimilarity for each of the plurality of alternative target bodies, the route guidance unit 16 revises the route guidance such that the revised route guidance includes the alternative target body having the lowest degree of dissimilarity and provides the immediate guidance. It is thus possible to provide the revised route guidance (immediate guidance) while reducing a cognitive load on a driver that is caused by the revision of the preliminary guidance. In addition, it is possible to appropriately evaluate the dissimilarity between the preliminary guidance and the revised route guidance (immediate guidance).

In a modification of the present embodiment, the controller 12 may evaluate a driving load on a driver, and when the driving load is higher than a given threshold value, the controller 12 need not output the revised guidance information. The driving load is evaluated from a captured image from a vehicle-interior camera, a detection value from the biological sensor, or the like. For example, in the case where captured images show that the gaze direction of the driver frequently changes, the driving load is high. In addition, the higher a pulse detected from the biological sensor, the higher the driving load. The driving load may be evaluated from the traveling route or a captured image from a vehicle-exterior camera. For example, on the traveling route, the driving load is increased with an increase in the number of driving operations required by a route or with an increase in the number of pedestrians, other vehicles, or the like near the vehicle. The route guidance unit 16 compares the driving load with a given threshold value that is set in advance, and when the driving load is higher than the given threshold value, the route guidance unit 16 does not output the revised guidance information. In other words, if the driver with a high driving load is informed of new information by the immediate guidance, the driving load may be further increased. In the modification, by inhibiting the immediate guidance when the driving load is high, it is possible to prevent the driving load from being increased.

In a modification of the present embodiment, when the distance from the current position of the vehicle 1 to a guidance point is less than or equal to a given distance, the controller 12 may revise guidance by outputting corrected guidance information in which the presence of a target body is corrected. Specifically, when the distance from the current position of the vehicle to the guidance point is less than or equal to the given distance, the route guidance unit 16 revises guidance information such that the guidance information includes the corrected guidance information but does not include alternative guidance information. If the immediate guidance with the guidance information including the corrected guidance information and the alternative guidance information is provided when the current position of the vehicle 1 approaches the guidance point, the amount of the information increases, and the driver may fail to recognize the information. Therefore, when the current position of the vehicle 1 approaches the guidance point, the immediate guidance with limited information is provided. It is thus possible to enhance the reliability of the guidance.

### Description of Reference Numerals

- 1: vehicle
- 2: position obtaining device
- 3: vehicle-exterior sensor
- 4: vehicle-interior sensor
- 5: database
- 10: guidance revising apparatus
- 11: output device
- 12: controller
- 13: information obtaining unit
- 14: target body detecting unit
- 15: determining unit
- 16: route guidance unit

## Claims

1. A guidance revising method that is to be executed by a controller and for revising guidance to a destination, the guidance revising method comprising, by the controller:
obtaining, from a database storing information about a target body, a map target body at a guidance point where the guidance is needed, the map target body being the target body;
detecting an object using an on-board sensor at a position a first distance away from the guidance point during traveling on a guided traveling route;
determining whether the map target body matches the object;
revising guidance information on the guidance point when the map target body is determined not to match the object; and
outputting the guidance information revised at a position less than the first distance away from the guidance point.

2. The guidance revising method according to claim 1, wherein
the controller:
provides route guidance including the map target body at a position a second distance away from the guidance point, the second distance being longer than the first distance; and
executes determination of whether the map target body matches the object on the map target body on which the route guidance has been provided.

3. The guidance revising method according to claim 1 or 2, wherein the revised guidance information includes correction guidance information in which presence of the map target body has been corrected and/or alternative guidance information for providing guidance on an alternative target body serving as an alternative to the map target body.

4. The guidance revising method according to any one of claims 1 to 3, wherein the controller generates a message including the revised guidance information in accordance with an audio interface.

5. The guidance revising method according to claim 3, wherein the alternative guidance information includes information on at least one of an alternative target body other than the map target body before revision, a road shape and/or a road structure at the guidance point, and a dynamic subject body.

6. The guidance revising method according to any one of claims 1 to 5, wherein
the controller:
detects a plurality of potential alternative target bodies other than the map target body; and
evaluates, for each of the plurality of potential alternative target bodies, a degree of dissimilarity between the alternative target body and the map target body, and
the revised guidance information includes information about the alternative target body that is lowest in the degree of dissimilarity.

7. The guidance revising method according to claim 6, wherein the degree of dissimilarity is a value that is determined in accordance with at least one of elements including a positional relationship between a position of the map target body and the alternative target body at the guidance point, a positional relationship between the traveling route and the alternative target body at the guidance point, and a distance from the alternative target body to the guidance point.

8. The guidance revising method according to claim 1 or 2, wherein
the controller:
evaluates a driving load on a driver; and
does not output the revised guidance information when the driving load is higher than a given threshold value.

9. The guidance revising method according to claim 1 or 2, wherein the controller outputs corrected guidance information in which presence of the map target body has been corrected when a distance from a current position of a vehicle to the guidance point is less than or equal to a given distance.

10. A guidance revising apparatus comprising
a controller that revises guidance to a destination, wherein
the controller:
obtains, from a database storing information about a target body, a map target body at a guidance point where the guidance is needed, the map target body being the target body;
detects an object using an on-board sensor at a position a first distance away from the guidance point during traveling on a guided traveling route;
determines whether the map target body matches the object;
revises guidance information on the guidance point when the map target body is determined not to match the object; and
outputs the guidance information revised at a position less than the first distance away from the guidance point.
